# FASCICULE DE BREVET EUROPEEN

(11) **EP 2 162 703 B1**
(45) Date de publication et mention de la délivrance du brevet: **16.11.2011**
(21) Numéro de dépôt: 08826371.0
(22) Date de dépôt: 16.06.2008
(51) Int. Cl.: G01C 21/16, G01S 5/14

(54) **PROCÉDÉ ET DISPOSITIF POUR DÉTERMINER UNE POSITION FIABLE D'UN AÉRONEF**
VERFAHREN UND VORRICHTUNG ZUR ZUVERLÄSSIGEN BESTIMMUNG DER POSITION EINES FLUGZEUGS
METHOD AND DEVICE FOR DETERMINING A RELIABLE POSITION OF AN AIRCRAFT

(30) Priorité: 25.06.2007 FR 0704528
(43) Date de publication de la demande: 17.03.2010
(73) Titulaire: AIRBUS OPERATIONS (SAS), 31060 Toulouse (FR)
(72) Inventeur: HUYNH, Jean-Philippe, F-31170 Tournefeuille (FR); GUILLET, Alain, F-31700 Blagnac (FR); DATTLER, Stéphane, F-31450 Montlaur (FR); ORTET, Grégory, F-31400 Toulouse (FR)
(74) Mandataire: Hauer, Bernard
(86) Numéro de dépôt international: PCT/FR2008/000830
(87) Numéro de publication internationale: WO 2009/010650

(56) Documents cités:
- EP-A- 1 464 576
- US-A- 5 512 903
- US-A- 5 760 737
- CALL C ET AL: "Performance of Honeywell's Inertial/GPS Hybrid (HIGH) for RNP Operations" POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), page 244, XP010924866 ISBN: 0-7803-9454-2

## Description

La présente invention concerne un procédé et un dispositif pour déterminer une position courante fiable d'un aéronef, en particulier d'un avion de transport.

Pour guider un aéronef de la manière la plus précise possible, il est nécessaire d'avoir à disposition, en temps réel, une information concernant sa position, qui soit très fiable. Ceci sera particulièrement vrai avec les futures opérations aériennes de précision de type RNP AR ("Required Navigation Performance with Approbation Required" en anglais), en approche et au décollage, qui requièrent de naviguer à l'intérieur d'un couloir et de ne pas en sortir. A l'extérieur de ce couloir se trouve potentiellement du relief ou d'autres aéronefs. La demande de brevet FR-2 887 329 décrit un dispositif d'affichage particulier qui est adapté à une opération ou procédure de type RNP. Selon une telle procédure, l'aéronef est généralement guidé suivant un plan de vol prédéterminé, en devant respecter des contraintes de performance strictes.

De plus, on sait qu'en général les opérations de type RNP sont des opérations qui sont réalisées essentiellement à l'aide de récepteurs usuels associés à un système de navigation global par satellites de type GNSS ("Global Navigation Satellite System" en anglais) qui englobe l'ensemble des systèmes de navigation par satellites (GPS, Galiléo, ...) existants, à l'aide d'un système inertiel, et à l'aide d'au moins un système de gestion de vol par exemple de type FMS ("Flight Management System" en anglais).

Généralement, le ou les systèmes de gestion de vol élaborent une position de l'aéronef pour le reste des autres systèmes utilisateurs embarqués. Pour ce faire, chaque système de gestion de vol utilise, en général, soit des informations reçues directement desdits récepteurs de type GNSS (c'est-à-dire des récepteurs associés audit système GNSS), soit des informations hybrides utilisant des données inertielles, pour mettre en oeuvre un algorithme de sélection et construire (calculer) une position de l'aéronef. On notera que la demande de brevet FR-2 888 643 décrit un procédé pour déterminer une position au sol d'un avion en utilisant des données inertielles.

Or, le calcul de position est mis en oeuvre dans un système de gestion de vol selon une chaîne simple, qui est réalisée avec un logiciel de type DAL C ou de type DAL B. De plus, le récepteur GNSS et le système inertiel sont au minimum de type DAL B. Aussi, ces différents moyens ne permettent pas de déterminer une position fiable de l'aéronef (y compris dans des cas dégradés), capable de supporter des opérations aériennes critiques, telles que les futures opérations de type RNP AR précitées.

On sait que l'un des problèmes majeurs posés par les opérations de type RNP AR est qu'elles reposent sur l'utilisation d'une position très fiable, aussi bien horizontalement que verticalement.

A l'heure actuelle, les opérations de type RNP AR sont encore assimilées à des opérations d'approche de non précision et sont donc compatibles avec l'utilisation d'un système de gestion de vol usuel pour le calcul de la position. Cependant, l'une des caractéristiques des opérations de type RNP AR est que l'aéronef doit circuler le long d'un chemin précis dans l'espace pour éviter des obstacles potentiels (montagne, ...) beaucoup plus proches que ce qui est réalisé aujourd'hui de façon courante.

De plus, même si d'un point de vue réglementaire actuel, l'exigence spécifique de fiabilité est satisfaite avec les architectures usuelles précitées, il y aura un avantage important à disposer à l'avenir d'une architecture significativement plus robuste aux défaillances de position dans le contexte desdites futures opérations de type RNP AR, qui seront assimilées à des opérations de précision.

Par ailleurs, par le document EP-1 464 576, on connaît un dispositif d'aide au pilotage d'un aéronef lors d'une approche de non précision pendant une phase d'atterrissage. Ce dispositif a pour objet d'apprécier l'intégrité, la précision et la disponibilité de mesures et d'informations, et notamment de valeurs de position de l'aéronef, qui sont fournies par des équipements embarqués. Pour ce faire, concernant les valeurs de position, ce document antérieur prévoit :
- d'évaluer l'intégrité et la précision desdites valeurs de position;
- de vérifier la cohérence entre une valeur de position (de l'aéronef), calculée par un calculateur de gestion de vol FMS, et une valeur de position reçue d'un système GPS ; et
- pour vérifier cette cohérence, de simplement calculer la différence entre les deux valeurs de position et de la comparer à une valeur prédéterminée.

La présente invention a pour objet de remédier aux inconvénients précités. Elle concerne un procédé qui permet de déterminer une position particulièrement fiable d'un aéronef, et ceci sans avoir à modifier de façon importante les moyens, notamment les calculateurs, existant actuellement sur un aéronef pour mettre en oeuvre ce procédé, et sans perturber les systèmes utilisateurs existants.

A cet effet, selon l'invention, ledit procédé selon lequel, à une étape a), on engendre au moins trois premières valeurs de position qui concernent chacune la position courante de l'aéronef, chacune de ces trois premières valeurs de position est engendrée à partir d'informations issues respectivement de récepteurs embarqués qui sont associés à un système de positionnement par satellites, par exemple de type GNSS, est remarquable en ce que l'on réalise, de plus, les opérations suivantes :
b) on met en oeuvre des tests de cohérence pour vérifier si ces premières valeurs de position sont cohérentes entre elles, ces tests de cohérence (précisés ci-dessous) permettant de déclarer pour chacune desdites premières valeurs de position si elle est valide ou non en terme de fiabilité ;
c) on calcule, à l'aide desdites premières valeurs de position et à l'aide d'informations inertielles, au moins deux secondes valeurs de position qui concernent chacune la position courante de l'aéronef et qui correspondent à des valeurs de position hybrides ;
d) on met en oeuvre des tests de cohérence pour vérifier si lesdites secondes valeurs de position sont cohérentes entre elles, ces tests de cohérence permettant de déclarer pour chacune desdites secondes valeurs de position si elle est valide ou non en terme de fiabilité ; et
e) à partir d'au moins certaines desdites premières et secondes valeurs de position qui ont été déclarées valides au moyen des tests de cohérence mis en oeuvre auxdites étapes b) et d), on détermine, à l'aide d'une méthode de consolidation (précisée ci-dessous), une position courante fiable (dite consolidée) de l'aéronef.

Cette position courante fiable de l'aéronef peut être transmise à tout type de système utilisateur embarqué sur l'aéronef.

Ainsi, grâce à l'invention, et notamment grâce :
- à la prise en compte de deux types de valeurs de position, à savoir lesdites premières valeurs de position qui sont engendrés à l'aide des informations fournies par des récepteurs embarqués et lesdites secondes valeurs de position qui sont calculées à l'aide de ces premières valeurs de position et d'informations inertielles ;
- à la prise en compte uniquement de premières et de secondes valeurs de position qui ont été déclarées valides en termes de fiabilité ; et
- à la mise en oeuvre d'une méthode de consolidation particulière, précisée ci-dessous,
on obtient une position particulièrement fiable de l'aéronef.

En outre, comme précisé davantage ci-dessous, pour mettre en oeuvre ledit procédé, il n'est pas nécessaire de beaucoup modifier, structurellement et électriquement, les systèmes (notamment les calculateurs) existants. De plus, la mise en oeuvre dudit procédé n'a aucune répercussion sur les systèmes utilisateurs, qui ne doivent donc pas être modifiés lorsqu'ils utilisent la position fiable déterminée à l'aide du procédé conforme à l'invention.

De façon avantageuse, aux étapes a) et c), on détermine pour chaque valeur de position un espace de probabilité, chaque espace de probabilité étant centré autour de la valeur de position correspondante et définissant le volume dans lequel est situé, à une probabilité supérieure à un seuil prédéterminé (par exemple 10⁻⁷/heure de vol ou 10⁻⁹/heure de vol), la position effective de l'aéronef.

En outre, selon l'invention, lesdits tests de cohérence [mis en oeuvre à l'étape b) ou à l'étape d)] consistent à tester deux à deux des (premières ou secondes) valeurs de position, et chaque test de cohérence consiste à déterminer une valeur de seuil qui dépend des rayons des espaces de probabilité associés aux deux valeurs de position testées et à comparer la distance entre ces deux valeurs de position à ladite valeur de seuil, de sorte que, si ladite distance est supérieure à cette valeur de seuil, un problème de fiabilité existe entre les deux valeurs de position testées. Si un problème de fiabilité existe, on peut déterminer la valeur de position qui n'est pas valide en réalisant des tests de cohérence deux à deux avec au moins deux valeurs de position différentes.

Par ailleurs, on notera que le document EP-1 464 576 précité ne divulgue pas, notamment, les caractéristiques suivantes de la présente invention :
- déterminer, c'est-à-dire calculer, une position fiable. En effet, ce document antérieur prévoit uniquement de vérifier la fiabilité de valeurs de position qui sont obtenues de façon usuelle ;
- mettre en oeuvre la suite particulière d'étapes a) à e) précitées pour calculer la position fiable ;
- calculer cette position fiable à partir de premières et secondes valeurs de position d'origines différentes, qui ont été préalablement déclarées valides ; et
- utiliser les tests de cohérence particuliers précités, qui sont basés sur un calcul d'espaces de probabilité, pour vérifier la cohérence entre des valeurs de position.

De préférence, les tests de cohérence mis en oeuvre à l'étape b) ou à l'étape d) sont réalisés dans au moins deux calculateurs différents, ce qui permet de protéger la mise en oeuvre du procédé conforme à l'invention contre une éventuelle défaillance d'un desdits calculateurs.

Dans un mode de réalisation particulier, si une (première ou seconde) valeur de position est déclarée non valide à l'une des étapes b) et d), on indique une panne d'un moyen technique embarqué, qui est à l'origine du défaut de fiabilité de cette valeur de position.

Par ailleurs, selon l'invention, la méthode de consolidation mise en oeuvre à l'étape e) et précisée ci-dessous, peut également être utilisée aux étapes b) et d) pour déterminer une première position fiable auxiliaire ou une seconde position fiable auxiliaire, à partir desdites premières valeurs de position ou desdites secondes valeurs de position. Une telle première position fiable auxiliaire dite consolidée peut être transmise à un système utilisateur qui utilise habituellement l'une desdites premières valeurs de position. Cela s'applique par analogie à la seconde position fiable auxiliaire dite consolidée.

On notera que les caractéristiques précédentes peuvent également être appliquées à des troisièmes valeurs de position qui correspondent à des positions inertielles (courantes) de l'aéronef et qui sont déterminées par un système inertiel. Ces troisièmes valeurs de position peuvent représenter lesdites informations inertielles qui sont également utilisées pour calculer lesdites secondes valeurs de position.

En outre, afin d'augmenter la précision du calcul desdites secondes valeurs de position (valeurs de position hybrides), on détermine à l'étape c), ces secondes valeurs de position uniquement à l'aide de premières valeurs de position qui ont été précédemment déclarées valides [à l'étape b)].

En outre, une méthode de consolidation préférée consiste:
α) à faire des tests de cohérence pour vérifier tous les couples de valeurs de position, par exemple une première valeur de position et une seconde valeur de position, dans le but d'éliminer une valeur de position éventuellement non fiable par rapport aux autres. Un tel test de cohérence peut être basé, par exemple, sur l'écart entre chaque valeur de position et sur l'espace de probabilité associé à chaque valeur de position;
β) à faire des tests de performance pour identifier, parmi les valeurs de position testées comme cohérentes (c'est-à-dire fiables) à l'étape α), le meilleur couple de valeurs de position, à savoir celui présentant la meilleure fiabilité. Un tel test de performance peut être basé, par exemple, sur l'écart entre chaque valeur de position et sur l'espace de probabilité associé à chaque valeur de position; et
γ) à calculer, à partir du meilleur couple de valeurs de position déterminé à l'étape β), une valeur intermédiaire de position, ainsi qu'un espace de probabilité associé. Cette valeur intermédiaire de position peut correspondre, par exemple, à la moyenne ou à un barycentre pondéré des valeurs de position dudit meilleur couple. Cette valeur intermédiaire de position représente la valeur de position la plus fiable calculable (c'est-à-dire la position courante fiable consolidée précitée).

Cette méthode de consolidation est valable s'il existe au moins deux valeurs de position disponibles. Elle est toutefois plus efficace s'il existe au moins trois valeurs de position disponibles.

De préférence, ladite méthode de consolidation est mise en oeuvre dans au moins deux calculateurs différents, ce qui permet de protéger la mise en oeuvre du procédé conforme à l'invention contre une éventuelle défaillance d'un desdits calculateurs.

Par ailleurs, dans un mode de réalisation particulier, à l'étape a), deux desdits récepteurs utilisés sont destinés de façon usuelle à la navigation, et un troisième desdits récepteurs utilisés est uniquement destiné à la surveillance. Ceci permet en principe de toujours disposer d'une première valeur de position, puisque la perte simultanée de la position pour la surveillance et la navigation est très improbable.

La présente invention concerne également un dispositif pour déterminer une position fiable d'un aéronef, en particulier d'un avion de transport.

Selon l'invention, ledit dispositif du type comportant un système susceptible d'engendrer au moins trois premières valeurs de position qui concernent chacune la position courante de l'aéronef, ledit système comportant des récepteurs embarqués qui sont associés à un système de positionnement par satellites (par exemple de type GNSS) et qui sont susceptibles, chacun, de fournir des informations permettant d'engendrer une première valeur de position, est remarquable en ce qu'il comporte de plus :
- des premiers moyens pour mettre en oeuvre des tests de cohérence permettant de vérifier si ces premières valeurs de position sont cohérentes entre elles, ces tests de cohérence permettant de déclarer pour chacune desdites premières valeurs de position si elle est valide ou non en terme de fiabilité ;
- des deuxièmes moyens pour calculer, à l'aide desdites premières valeurs de position et à l'aide d'informations inertielles, au moins deux secondes valeurs de position qui concernent chacune la position courante de l'aéronef et qui correspondent à des valeurs de position hybrides ;
- des troisièmes moyens pour mettre en oeuvre des tests de cohérence permettant de vérifier si lesdites secondes valeurs de position sont cohérentes entre elles, ces tests de cohérence permettant de déclarer pour chacune desdites secondes valeurs de position si elle est valide ou non en terme de fiabilité ; et
- des quatrièmes moyens pour déterminer, à partir d'au moins certaines desdites premières et secondes valeurs de position qui ont été déclarées valides par lesdits premiers et troisièmes moyens, une position courante fiable de l'aéronef, en mettant en oeuvre une méthode de consolidation.

La présente invention concerne également un aéronef muni d'un tel dispositif.
Les figures du dessin annexé feront bien comprendre comment l'invention peut être réalisée. Sur ces figures, des références identiques désignent des éléments semblables.
Les figures 1 et 5 à 7 sont des schémas synoptiques de différents modes de réalisation d'un dispositif conforme à l'invention.
Les figures 2A, 2B, 3A, 3B, 4A et 4B sont des schémas qui permettent de bien expliquer les caractéristiques d'un test de cohérence conforme à l'invention.

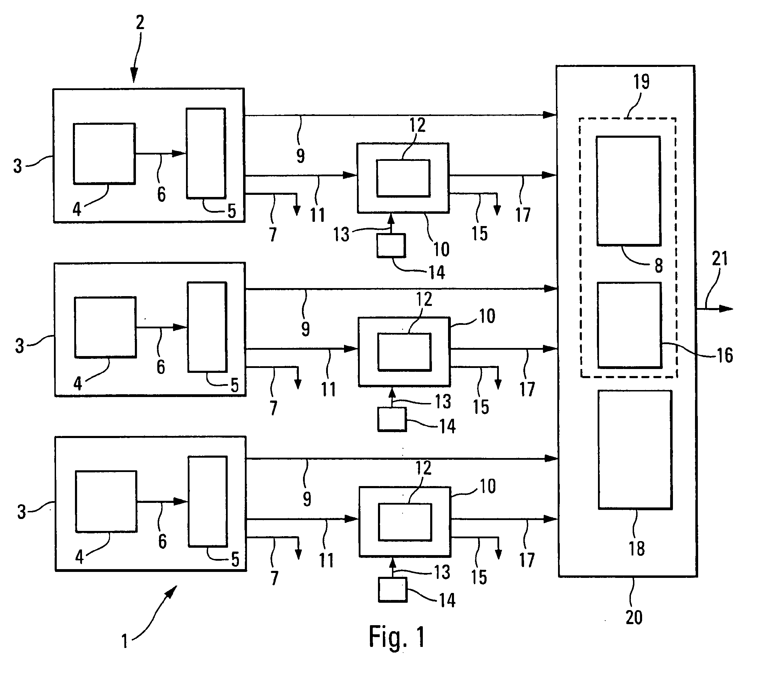

Le dispositif 1 conforme à l'invention et représenté schématiquement sur la figure 1 est embarqué sur un aéronef, en particulier un avion de transport, non représenté, et est destiné à déterminer en temps réel une position courante de cet aéronef, position courante qui doit être très fiable.

Ledit dispositif 1 est du type comportant un système 2 qui est susceptible d'engendrer au moins trois premières valeurs de position. Chacune de ces premières valeurs de position est une valeur indiquant la position courante de l'aéronef. Ledit système 2 comporte des unités 3 qui sont associées à un système de positionnement par satellites, de préférence à un système de navigation global par satellites de type GNSS ("Global Navigation Satellite System" en anglais) qui englobe l'ensemble des systèmes de navigation par satellites (GPS, Galiléo, ...) existants. Ces unités 3 sont susceptibles chacune d'engendrer au moins une première valeur de position.

De façon usuelle, chacune de ces unités 3 comporte:
- un récepteur 4 usuel, muni d'une antenne, qui permet notamment de recevoir des informations de satellites faisant partie dudit système de positionnement par satellite ; et
- des moyens de calcul 5 qui sont reliés par l'intermédiaire d'une liaison 6 audit récepteur 4 et qui sont formés de manière à déterminer, de façon usuelle, à partir des informations reçues, une première valeur de position.

Ces unités 3 peuvent transmettre, de façon usuelle, ces informations de position à des systèmes utilisateurs (non représentés) de l'aéronef, par l'intermédiaire d'une liaison 7.

Selon l'invention, ledit dispositif 1 comporte de plus:
- des moyens 8 pour mettre en oeuvre des tests de cohérence permettant de vérifier si les premières valeurs de position, reçues desdites unités 3 à chaque fois par l'intermédiaire d'une liaison 9, sont cohérentes entre elles. Ces tests de cohérence précisés ci-dessous permettent de déclarer, pour chacune des premières valeurs de position reçues desdites unités 3, si elle est valide ou non en termes de fiabilité ;
- des unités 10 qui sont reliées chacune par l'intermédiaire d'une liaison 11 auxdites unités 3 (notamment dans l'exemple de la figure 1) et qui sont formées de manière à calculer, de façon usuelle, des secondes valeurs de position qui représentent chacune la position courante de l'aéronef et qui correspondent à des valeurs de position hybrides. Pour ce faire, lesdites unités 10 comportent chacune un moyen de calcul 12 qui détermine une seconde valeur de position à partir d'une première valeur de position reçue d'une unité 3 et à partir d'informations inertielles reçues par l'intermédiaire d'une liaison 13 de moyens 14. Les différents moyens 14 peuvent faire partie d'un système inertiel usuel;
- des moyens 16 qui mettent en oeuvre des tests de cohérence permettant de vérifier si les secondes valeurs de position reçues par l'intermédiaire de liaisons 17 desdites unités 10 sont cohérentes entre elles. Ces tests de cohérence précisés ci-dessous permettent de déclarer, pour chacune de ces secondes valeurs de position, si elle est valide ou non en termes de fiabilité ; et
- des moyens 18 pour déterminer, à partir d'au moins certaines desdites premières et secondes valeurs de position qui ont été déclarées valides par lesdits moyens 8 et 16, une position courante fiable de l'aéronef, en mettant en oeuvre une méthode de consolidation précisée ci-dessous.

Dans un mode de réalisation particulier, lesdits moyens 8 et 16 font partie d'une seule et même unité 19 qui réalise tous les tests de cohérence, et lesdits moyens 8, 16 et 18 sont intégrés dans un calculateur 20 qui est en mesure de transmettre les résultats des traitements réalisés par ces moyens 8, 16 et 18, et notamment ladite position fiable de l'aéronef, par l'intermédiaire d'une liaison 21 à des systèmes utilisateurs usuels (non représentés) de l'aéronef.

En outre, les unités 3 sont, par exemple, des récepteurs multimodes d'aide à l'atterrissage de type MMR ("Multi Mode Receiver" en anglais).

Ainsi, grâce à l'invention, et notamment grâce:
- à la prise en compte de deux types de valeurs de position, à savoir lesdites premières valeurs de position qui sont engendrés (par les unités 3) à l'aide des informations fournies par des récepteurs 4 embarqués et lesdites secondes valeurs de position qui sont calculées (par les unités 10) à l'aide de ces premières valeurs de position et d'informations inertielles ;
- à la prise en compte (par les moyens 18) uniquement de premières et de secondes valeurs de position qui ont été déclarées valides en termes de fiabilité (par les moyens 8 et 16) ; et
- à la mise en oeuvre (par les moyens 18) d'une méthode de consolidation particulière, précisée ci-dessous,
le dispositif 1 permet de calculer et de transmettre, en temps réel, une position courante, particulièrement fiable, de l'aéronef.

En outre, pour réaliser ledit dispositif 1, il n'est pas nécessaire de beaucoup modifier, structurellement et électriquement, les systèmes (notamment les calculateurs) existants. De plus, ce dispositif 1 n'a aucune répercussion sur les systèmes utilisateurs, qui ne doivent donc pas être modifiés lorsqu'ils utilisent la position fiable déterminée par ce dernier.

Lesdits moyens 5 déterminent, en plus de chaque première valeur de position, un espace de probabilité associé. Chaque espace de probabilité est centré autour de la première valeur de position correspondante et définit le volume dans lequel est situé, à une probabilité supérieure à un seuil prédéterminé (par exemple 10⁻⁷/heure de vol ou 10⁻⁹/heure de vol), la position effective (courante) de l'aéronef.

De même, lesdits moyens 12 déterminent également, pour chaque seconde valeur de position, un espace de probabilité associé. Dans ce cas, chaque espace de probabilité est centré autour de la seconde valeur de position correspondante, et il définit le volume dans lequel est situé, à une probabilité supérieure à un seuil prédéterminé (par exemple 10⁻⁷/heure de vol ou 10⁻⁹/heure de vol), la position effective (courante) de l'aéronef.

Dans un mode de réalisation particulier, les tests de cohérence mis en oeuvre par lesdits moyens 8 consistent à tester deux à deux des premières valeurs de position reçues desdites unités 3. De même, lesdits tests de cohérence mis en oeuvre par lesdits moyens 16 consistent à tester deux à deux des secondes valeurs de position reçues desdites unités 10. On notera que lesdits moyens de test, au lieu d'être intégrés dans le calculateur 20, peuvent également être intégrés dans chacune desdites unités 3 et dans chacune desdites unités 10.

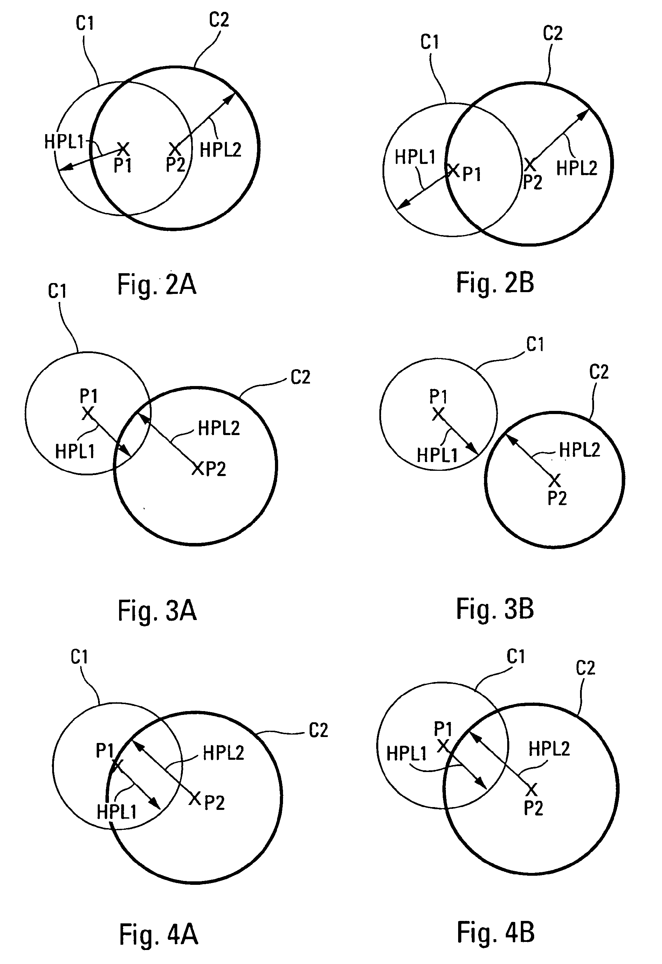

Dans un mode de réalisation préféré, pour mettre en oeuvre un test de cohérence avec des (premières ou secondes) valeurs de position P1 et P2, les moyens 8 et/ou les moyens 16 comportent :
- un élément pour déterminer une valeur de seuil VS qui dépend des rayons HPL1 et HPL2 des espaces de probabilité (illustrés par des cercles C1 et C2 sur les figures 2A à 4B) associés aux deux valeurs de position P1 et P2 testées ; et
- un élément pour comparer la distance P1 P2 entre ces deux valeurs de position P1 et P2 à ladite valeur de seuil VS, de sorte que, si ladite distance P1 P2 est supérieure à cette valeur de seuil VS, un problème de fiabilité (ou de cohérence) existe entre ces deux valeurs de position P1 et P2 testées.

Si un problème de fiabilité existe, les moyens 8 et 16 peuvent déterminer la valeur de position qui n'est pas valide en réalisant des tests de cohérence, deux à deux, avec au moins deux valeurs de position différentes.

Dans un premier exemple représenté sur les figures 2A et 2B, ladite valeur de seuil VS correspond à la valeur minimale des rayons HPL1 et HPL2. Dans ce cas :
- dans l'exemple de la figure 2A, comme P1 P2 < VS, les deux valeurs P1 et P2 sont cohérentes entre elles ; et
- dans l'exemple de la figure 2B, comme P1 P2 > VS, les deux valeurs P1 et P2 ne sont pas cohérentes entre elles.

Dans ce premier exemple, deux valeurs de position P1 et P2 sont cohérentes entre elles, si chaque cercle C1, C2 illustrant un espace de probabilité englobe le centre de l'autre cercle.

Dans un deuxième exemple représenté sur les figures 3A et 3B, ladite valeur de seuil VS correspond à la somme des rayons HPL1 et HPL2. Dans ce cas :
- dans l'exemple de la figure 3A, comme P1 P2 < VS, les deux valeurs P1 et P2 sont cohérentes entre elles ; et
- dans l'exemple de la figure 3B, comme P1 P2 > VS, les deux valeurs P1 et P2 ne sont pas cohérentes entre elles.

Dans ce deuxième exemple, deux valeurs de position P1 et P2 sont cohérentes entre elles, si les deux cercles C1 et C2 correspondants présentent une intersection.

En outre, dans un troisième exemple représenté sur les figures 4A et 4B, ladite valeur de seuil VS correspond à la valeur maximale des rayons HPL1 et HPL2. Dans ce cas :
- dans l'exemple de la figure 4A, comme P1 P2 < VS, les deux valeurs P1 et P2 sont cohérentes entre elles ; et
- dans l'exemple de la figure 4B, comme P1 P2 > Vs, les deux valeurs P1 et P2 ne sont pas cohérentes entre elles.

Dans ce troisième exemple, deux valeurs de position P1 et P2 sont cohérentes entre elles, si au moins un cercle C1, C2 englobe le centre P1, P2 de l'autre cercle.

De préférence, les tests de cohérence mis en oeuvre par les moyens 8 et ceux mis en oeuvre par les moyens 16 sont réalisés dans au moins deux calculateurs différents, ce qui permet de protéger les traitements conformes à l'invention contre une éventuelle défaillance d'un desdits calculateurs.

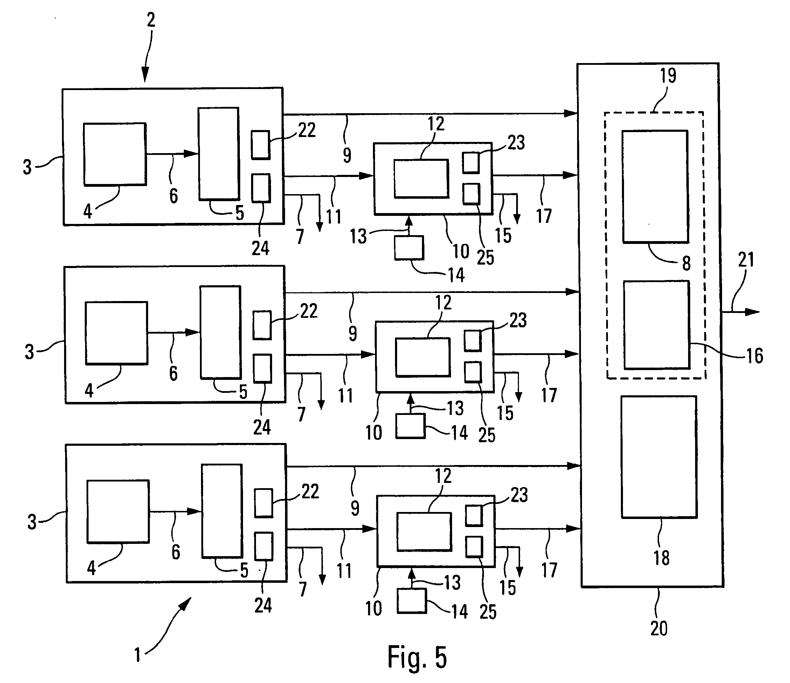

Dans un mode de réalisation particulier, le dispositif 1 comporte, comme représenté sur la figure 5, des moyens 22 qui sont par exemple intégrés dans chaque unité 3 et qui sont formés de manière à rechercher (puis à indiquer) une panne d'un moyen technique embarqué, en particulier du récepteur 4, lorsqu'une première valeur de position a été déclarée non valide à l'aide d'un test de cohérence du type précité.

En outre, dans un mode de réalisation particulier, ledit dispositif 1 comporte également des moyens 23 (représentés sur la figure 5) qui sont par exemple intégrés dans chaque unité 10 et qui sont formés de manière à rechercher (puis à indiquer) une panne d'un moyen technique embarqué, lorsqu'une seconde valeur de position a été déclarée non valide à l'aide d'un test de cohérence du type précité.

En outre, dans un mode de réalisation particulier, afin d'augmenter la précision du calcul des secondes valeurs de position (valeurs de position hybrides), les unités 10 déterminent ces secondes valeurs de position uniquement à l'aide de premières valeurs de position qui ont été précédemment déclarées valides.

Par ailleurs, pour mettre en oeuvre une méthode de consolidation, lesdits moyens 18 comportent des éléments non représentés :
α) destinés à faire des tests de cohérence pour vérifier tous les couples de valeurs de position, par exemple une première valeur de position et une seconde valeur de position, afin d'éliminer toute valeur de position qui est non fiable par rapport aux autres. Un tel test de cohérence peut être basé, par exemple, sur l'écart entre chaque valeur de position Pi, Pj et sur l'espace de probabilité HPLi, HPLj associé à chaque valeur de position Pi, Pj;
β) destinés à faire des tests de performance pour identifier, parmi les valeurs de position testées comme cohérentes, le meilleur couple de valeurs de position, c'est-à-dire celui présentant la meilleure fiabilité. Un tel test de performance peut être basé, par exemple, sur l'écart entre chaque valeur de position et sur l'espace de probabilité associé à chaque valeur de position ; et
γ) destinés à calculer, à partir du meilleur couple de valeurs de position ainsi déterminé, une valeur intermédiaire de position, ainsi qu'un espace de probabilité associé. Cette valeur intermédiaire de position peut correspondre, par exemple, à la moyenne ou à un barycentre pondéré des valeurs de position dudit meilleur couple. Cette valeur intermédiaire de position représente la valeur de position la plus fiable calculable (c'est-à-dire la position courante fiable consolidée Pc précitée).

Cette méthode de consolidation est valable s'il existe au moins deux valeurs de position disponibles. Elle est bien entendu plus efficace s'il existe au moins trois valeurs de position disponibles, par exemple trois ou quatre valeurs de position.

L'étape β) précitée consiste donc à déterminer parmi les couples cohérents le meilleur couple. Le critère pour trouver ce meilleur couple est le suivant : Pi et Pj est le meilleur couple si et seulement si la somme HPLi + HPLj + (Pi-Pj) est minimale.

En outre, l'étape γ) précitée consiste à déterminer la position consolidée Pc. Cela peut être réalisé selon l'une de deux options différentes:
a) option 1 : Pc est le milieu de Pi et Pj, c'est-à-dire Pc=1/2|Pi+Pj| ;
b) option 2 : Pc est le barycentre pondéré de Pi et Pj, c'est-à-dire
   |Pi-Pc|=q|Pi-Pj| avec q=1/2 [1+(HPLj-HPLi)/|Pi-Pj|].

En outre, ladite étape γ) permet également de déterminer le rayon HPLc de l'espace de probabilité associé à ladite position consolidée HPLc. Selon l'invention, ce rayon HPLc est calculé à partir de l'une des relations suivantes:
a) option 1 : HPLc = Max (HPLi, HPLj)+1/2 |Pi-Pi|
b) option 2 : HPLc = 1/2 [HPLi+HPLj+|Pi-Pj|].

Par ailleurs, la méthode de consolidation mise en oeuvre par lesdits moyens 18 peut également être utilisée pour déterminer une première position fiable auxiliaire (consolidée) ou une seconde position fiable auxiliaire (consolidée), à partir respectivement desdites premières valeurs de position ou desdites secondes valeurs de position. Une telle première position fiable auxiliaire peut être transmise à un système utilisateur qui utilise habituellement l'une desdites premières valeurs de position. Cela s'applique par analogie à une seconde position fiable auxiliaire.

On notera que les caractéristiques précédentes peuvent également être appliquées à des troisièmes valeurs de position qui correspondent à des positions inertielles (courantes) de l'aéronef et qui sont déterminées par un système inertiel usuel comprenant par exemple les moyens 14. Ces troisièmes valeurs de position peuvent représenter lesdites informations inertielles qui sont également utilisées par les unités 10 pour calculer lesdites secondes valeurs de position.

Cette méthode de consolidation peut également être mise en oeuvre par des moyens 24 et 25 qui sont intégrés respectivement dans lesdites unités 3 et 10, comme représenté sur la figure 5.

Par ailleurs, dans un mode de réalisation particulier, la méthode de consolidation consiste à déterminer une position fiable, à partir d'au moins certaines des premières et secondes positions valides, en tenant compte de l'utilisation opérationnelle envisagée de la position fiable ainsi déterminée.

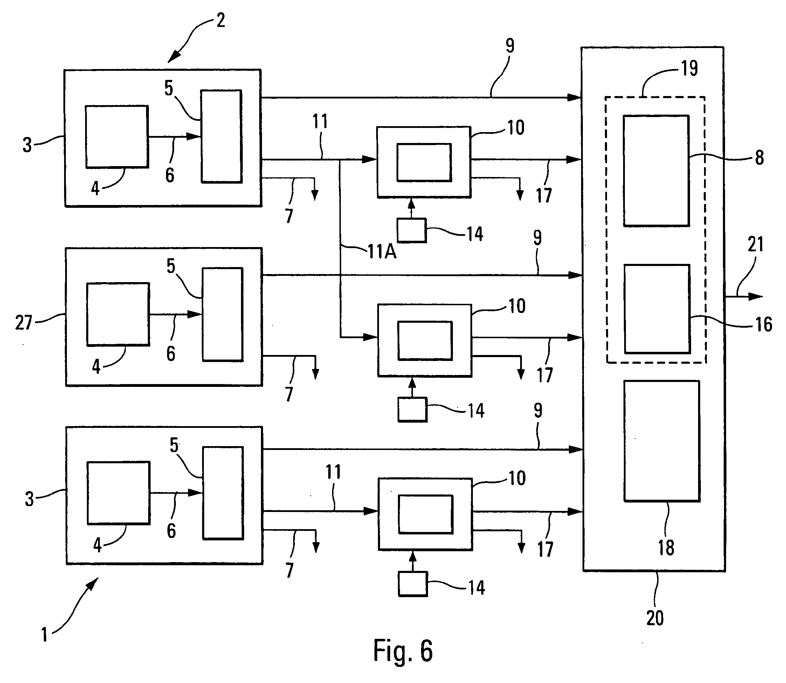

Dans un mode de réalisation particulier représenté sur la figure 6, le dispositif 1 comporte deux unités 3 telles que celles des figures 1 et 5 qui sont notamment destinées à la navigation, ainsi qu'une unité 27 qui est uniquement destinée à la surveillance. Les premières valeurs de position fiables, déterminées par cette unité 27 qui est dans son principe similaire aux unités 3, ne sont pas transmises à une unité 10. Cette distinction entre unités 3 destinées à la navigation et unité 27 destinée à la surveillance permet en général de toujours disposer d'une première valeur de position, puisque la perte simultanée de la position pour la surveillance et de la position pour la navigation est très improbable. De plus, le dispositif 1 peut comporter deux unités 10 reliées aux deux unités 3 ou, comme représenté sur la figure 6, trois unités 10 dont deux sont alors reliées à une même unité 3 (via des liaisons 11 et 11 A).

Dans un mode de réalisation particulier, l'unité 27 est différente en ce qui concerne le hardware et/ou en ce qui concerne le logiciel, des unités 3 de manière à ne pas être sujet aux mêmes pannes. Cette unité 27 peut, par exemple, être installée de façon autonome et possède une antenne dédiée de façon à n'avoir aucune interaction avec les unités 3. Toutefois, dans une autre variante de réalisation, l'unité 27 qui est installée de façon autonome peut partager une antenne GPS avec un récepteur 4 de l'une des unités 3, en particulier grâce à l'agencement d'un élément simple de type "séparateur de signaux".

Cette unité 27 démarre de façon autonome, sans aide externe, et acquière les signaux des satellites de type GNSS. Dans une variante de réalisation. Cette unité 27 comporte un algorithme de navigation qui est, toutefois, différent de ceux des unités 3 de façon à bénéficier en système, d'un fonctionnement similaire qui rend l'ensemble beaucoup plus robuste.

Dans un autre mode de réalisation, l'unité 27 est installée dans un autre système embarqué de l'aéronef, tel qu'un système de surveillance, par exemple de type TAWS ("Terrain Awareness and Warning System" en anglais). Dans ce cas, la position calculée dans le système de surveillance est émise sur un bus et vient alimenter la logique de calcul des premières valeurs de position. La position utilisée par les systèmes de surveillance reste encore la position fiable consolidée avec toutes les positions disponibles. Ce n'est que dans un cas dégradé que la position de cette unité 27 est utilisée en direct par les systèmes utilisateurs de l'aéronef.

L'avantage de ce mode de réalisation de la figure 6 est que la perte simultanée de la position pour la navigation et de celle pour la surveillance est improbable. Les cas de conflits (position calculée donnant un résultat significativement différent) entre la position utilisée pour la surveillance et la position utilisée pour la navigation sont extrêmement réduits.

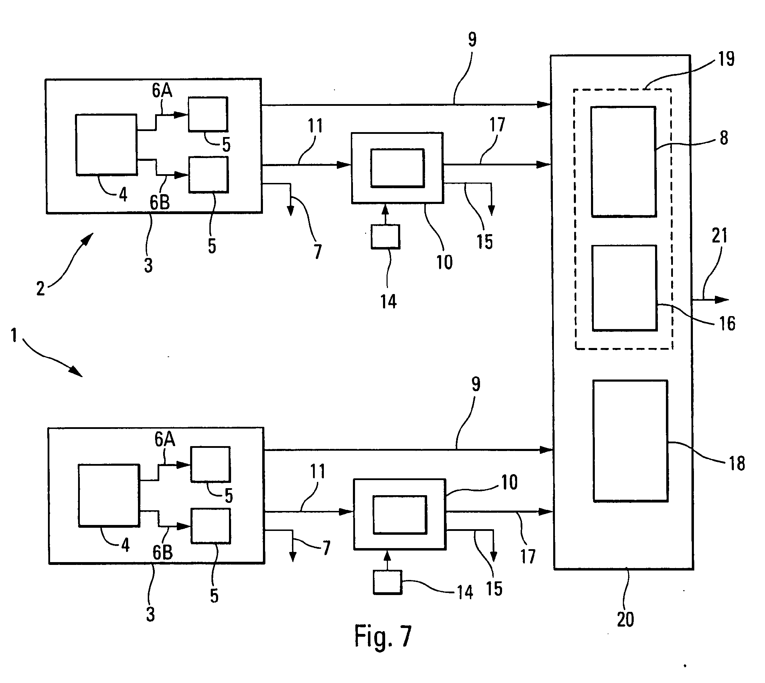

Par ailleurs, dans l'exemple de la figure 7, le dispositif 1 prend en compte quatre premières valeurs de position qui ont été engendrées par quatre moyens de calcul 5 différents. Ces moyens de calcul 5 sont montés deux à deux dans des unités 3. Dans chaque unité 3, deux moyens de calcul 5 sont reliés respectivement par l'intermédiaire de liaisons 6A et 6B au récepteur 4.

On obtient ainsi un doublement de la chaîne de calcul dans chaque unité 3 et la sortie de deux premières valeurs de position, avec leurs paramètres usuels de performances.

On notera que les modifications suivantes peuvent également être apportées aux unités 3 :
- introduction de disimilarités matérielles entre les deux moyens de calcul 5 de façon à écarter ou réduire les probabilités des modes communs de panne ; et
- doublement des récepteurs 4, et introduction d'un séparateur de signaux en amont des récepteurs 4.

## Revendications

1. Procédé pour déterminer une position fiable d'un aéronef, procédé selon lequel on réalise les opérations suivantes :
a) on engendre au moins trois premières valeurs de position qui concernent chacune la position courante de l'aéronef, chacune de ces trois premières valeurs de position étant engendrée à partir d'informations issues respectivement de récepteurs (4) embarqués qui sont associés à un système de positionnement par satellites, et on détermine pour chaque valeur de position un espace de probabilité (C1, C2), chaque espace de probabilité (C1, C2) étant centré autour de la valeur de position (P1, P2) correspondante et définissant le volume dans lequel est situé, à une probabilité supérieure à un seuil prédéterminé, la position effective de l'aéronef ;
b) on met en oeuvre des tests de cohérence pour vérifier si ces premières valeurs de position sont cohérentes entre elles, ces tests de cohérence permettant de déclarer pour chacune desdites premières valeurs de position si elle est valide ou non en terme de fiabilité, lesdits tests de cohérence consistant à tester deux à deux des valeurs de position, chaque test de cohérence consistant à déterminer une valeur de seuil qui dépend des rayons (HPL1, HPL2) des espaces de probabilité (C1, C2) associés aux deux valeurs de position (P1, P2) testées et à comparer la distance entre ces deux valeurs de position à ladite valeur de seuil de sorte que, si ladite distance est supérieure à cette valeur de seuil, il existe un problème de fiabilité ;
c) on calcule, à l'aide desdites premières valeurs de position et à l'aide d'informations inertielles, au moins deux secondes valeurs de position qui concernent chacune la position courante de l'aéronef et qui correspondent à des valeurs de position hybrides ;
d) on met en oeuvre des tests de cohérence pour vérifier si lesdites secondes valeurs de position sont cohérentes entre elles, ces tests de cohérence permettant de déclarer pour chacune desdites secondes valeurs de position si elle est valide ou non en terme de fiabilité ; et
e) à partir d'au moins certaines desdites premières et secondes valeurs de position qui ont été déclarées valides au moyen des tests de cohérence mis en oeuvre auxdites étapes b) et d), on détermine, à l'aide d'une méthode de consolidation, une position courante fiable de l'aéronef.

2. Procédé selon la revendication 1,
**caractérisé en ce que**, si une valeur de position est déclarée non valide à l'une des étapes b) et d), on indique qu'une panne est à l'origine du défaut de fiabilité de cette valeur de position.

3. Procédé selon l'une des revendications 1 et 2,
**caractérisé en ce qu'**à l'étape b), on détermine à partir desdites premières valeurs de position une première position fiable auxiliaire, en mettant en oeuvre une méthode de consolidation, cette première position fiable auxiliaire étant susceptible d'être transmise à un système utilisateur.

4. Procédé selon l'une quelconque des revendications précédentes, **caractérisé en ce qu'**à l'étape d), on détermine à partir desdites secondes valeurs de position une seconde position fiable auxiliaire, en mettant en oeuvre une méthode de consolidation, cette seconde position fiable auxiliaire étant susceptible d'être transmise à un système utilisateur.

5. Procédé selon l'une quelconque des revendications précédentes, **caractérisé en ce qu'**à l'étape c), on détermine lesdites secondes valeurs de position uniquement à l'aide de premières valeurs de position qui ont été déclarées valides à l'étape b).

6. Procédé selon l'une quelconque des revendications précédentes, **caractérisé en ce qu'**une méthode de consolidation consiste :
α) à faire des tests de cohérence pour vérifier tous les couples de valeurs de position de manière à éliminer toute valeur de position non fiable ;
β) à faire des tests de performance pour identifier, parmi les valeurs de position testées cohérentes à l'étape α), le couple de valeurs de position présentant la meilleure fiabilité ; et
γ) à calculer, à partir du couple de valeurs de position présentant la meilleure fiabilité, une valeur intermédiaire de position, ainsi qu'un espace de probabilité associé, cette valeur intermédiaire de position correspondant à ladite position courante fiable de l'aéronef.

7. Procédé selon l'une quelconque des revendications précédentes, **caractérisé en ce qu'**à l'étape a), deux desdits récepteurs utilisés sont destinés à la navigation et un troisième desdits récepteurs utilisés est uniquement destiné à la surveillance.

8. Dispositif pour déterminer une position fiable d'un aéronef, ledit dispositif (1) comportant :
- un système (2) susceptible d'engendrer au moins trois premières valeurs de position qui concernent chacune la position courante de l'aéronef, ledit système (2) comportant des récepteurs (4) embarqués qui sont associés à un système de positionnement par satellites et qui sont susceptibles, chacun, de fournir des informations permettant d'engendrer une première valeur de position, un espace de probabilité (C1, C2) étant déterminé pour chaque valeur de position, chaque espace de probabilité (C1, C2) étant centré autour de la valeur de position (P1, P2) correspondante et définissant le volume dans lequel est situé, à une probabilité supérieure à un seuil prédéterminé, la position effective de l'aéronef ;
- des premiers moyens (8) pour mettre en oeuvre des tests de cohérence permettant de vérifier si ces premières valeurs de position sont cohérentes entre elles, ces tests de cohérence permettant de déclarer pour chacune desdites premières valeurs de position si elle est valide ou non en terme de fiabilité, lesdits tests de cohérence consistant à tester deux à deux des valeurs de position, chaque test de cohérence consistant à déterminer une valeur de seuil qui dépend des rayons (HPL1, HPL2) des espaces de probabilité (C1, C2) associés aux deux valeurs de position (P1, P2) testées et à comparer la distance entre ces deux valeurs de position à ladite valeur de seuil de sorte que, si ladite distance est supérieure à cette valeur de seuil, il existe un problème de fiabilité ;
- des deuxièmes moyens (10) pour calculer, à l'aide desdites premières valeurs de position et à l'aide d'informations inertielles, au moins deux secondes valeurs de position qui concernent chacune la position courante de l'aéronef et qui correspondent à des valeurs de position hybrides ;
- des troisièmes moyens (16) pour mettre en oeuvre des tests de cohérence permettant de vérifier si lesdites secondes valeurs de position sont cohérentes entre elles, ces tests de cohérence permettant de déclarer pour chacune desdites secondes valeurs de position si elle est valide ou non en terme de fiabilité ; et
- des quatrièmes moyens (18) pour déterminer, à partir d'au moins certaines desdites premières et secondes valeurs de position qui ont été déclarées valides par lesdits premiers et troisièmes moyens (8, 16), une position courante fiable de l'aéronef, en mettant en oeuvre une méthode de consolidation.

## Claims

1. A method for determining a reliable position of an aircraft, according to which method the following operations are carried out:
a) at least three first position values which each relate to the current position of the aircraft are produced, each of these three first position values being produced on the basis of information arising respectively from onboard receivers (4) which are associated with a satellite positioning system, and for each position value a probability space (C1, C2) is determined, each probability space (C1, C2) being centered around the corresponding position value (P1, P2) and defining the volume in which, with a probability greater than a predetermined threshold, the actual position of the aircraft is situated;
b) consistency tests are implemented to verify whether these first position values are mutually consistent, these consistency tests making it possible to declare for each of said first position values whether or not it is valid in terms of reliability, said consistency tests consisting in testing position values pairwise, each consistency test consisting in determining a threshold value which depends on the radii (HPL1, HPL2) of the probability spaces (C1, C2) associated with the two tested position values (P1, P2) and in comparing the distance between these two position values with said threshold value so that, if said distance is greater than this threshold value, there exists a reliability problem;
c) at least two second position values which each relate to the current position of the aircraft and which correspond to hybrid position values are calculated with the aid of said first position values and with the aid of inertial information;
d) consistency tests are implemented to verify whether said second position values are mutually consistent, these consistency tests making it possible to declare for each of said second position values whether or not it is valid in terms of reliability; and
e) on the basis of at least certain of said first and second position values which have been declared valid by means of the consistency tests implemented in said steps b) and d), a reliable current position of the aircraft is determined with the aid of a consolidation scheme.

2. The method as claimed in claim 1, **characterized in that**, if a position value is declared invalid in one of steps b) and d), it is indicated that a fault is responsible for the lack of reliability of this position value.

3. The method as claimed in one of claims 1 and 2, **characterized in that** in step b), a first auxiliary reliable position is determined on the basis of said first position values by implementing a consolidation scheme, this first auxiliary reliable position being able to be transmitted to a user system.

4. The method as claimed in any one of the preceding claims, **characterized in that** in step d), a second auxiliary reliable position is determined on the basis of said second position values by implementing a consolidation scheme, this second auxiliary reliable position being able to be transmitted to a user system.

5. The method as claimed in any one of the preceding claims, **characterized in that** in step c), said second position values are determined only with the aid of first position values which have been declared valid in step b).

6. The method as claimed in any one of the preceding claims, **characterized in that** a consolidation scheme consists:
α) in conducting consistency tests to verify all the pairs of position values so as to eliminate any unreliable position value;
β) in conducting performance tests to identify, from among the position values tested consistent in step α), the pair of position values exhibiting the best reliability; and
γ) in calculating, on the basis of the pair of position values exhibiting the best reliability, an intermediate position value, as well as an associated probability space, this intermediate position value corresponding to said reliable current position of the aircraft.

7. The method as claimed in any one of the preceding claims, **characterized in that** in step a), two of said receivers used are intended for navigation and a third of said receivers used is intended only for monitoring.

8. A device for determining a reliable position of an aircraft, said device (1) comprising:
- a system (2) able to produce at least three first position values which each relate to the current position of the aircraft, said system (2) comprising receivers (4) carried onboard which are associated with a satellite positioning system and which are, each, able to provide information making it possible to produce a first position value, a probability space (C1, C2) being determined for each position value, each probability space (C1, C2) being centered around the corresponding position value (P1, P2) and defining the volume in which, with a probability greater than a predetermined threshold, the actual position of the aircraft is situated;
- first means (8) for implementing consistency tests making it possible to verify whether these first position values are mutually consistent, these consistency tests making it possible to declare for each of said first position values whether or not it is valid in terms of reliability, said consistency tests consisting in testing position values pairwise, each consistency test consisting in determining a threshold value which depends on the radii (HPL1, HPL2) of the probability spaces (C1, C2) associated with the two tested position values (P1, P2) and in comparing the distance between these two position values with said threshold value so that, if said distance is greater than this threshold value, there exists a reliability problem;
- second means (10) for calculating, with the aid of said first position values and with the aid of inertial information, at least two second position values which each relate to the current position of the aircraft and which correspond to hybrid position values;
- third means (16) for implementing consistency tests making it possible to verify whether said second position values are mutually consistent, these consistency tests making it possible to declare for each of said second position values whether or not it is valid in terms of reliability; and
- fourth means (18) for determining, on the basis of at least certain of said first and second position values which have been declared valid by said first and third means (8, 16), a reliable current position of the aircraft, by implementing a consolidation scheme.

## Patentansprüche

1. Verfahren zum Bestimmen einer verlässlichen Position eines Luftfahrzeugs, Verfahren, bei dem die folgenden Vorgänge durchgeführt werden:
a) man generiert zumindest drei erste Positionswerte, die jeweils die laufende Position des Luftfahrzeugs betreffen, wobei jeder dieser ersten drei Positionswerte aus Informationen generiert wird, die jeweils aus Bordempfängern (4) stammen, die einem satellitengesteuerten Positionierungssystem zugeordnet sind, und man bestimmt für jeden Positionswert einen Wahrscheinlichkeitsraum (C1, C2), wobei jeder Wahrscheinlichkeitsraum (C1, C2) um den entsprechenden Positionswert (P1, P2) zentriert ist, und das Volumen definiert, in dem sich die tatsächliche Position des Luftfahrzeugs mit einer Wahrscheinlichkeit befindet, die über einem vorbestimmten Grenzwert liegt;
b) man führt Kohärenztests durch, um zu überprüfen, ob diese ersten Positionswerte zueinander kohärent sind, wobei es diese Kohärenztests ermöglichen, für jeden der besagten ersten Positionswerte festzulegen, ob er in Bezug auf seine Verlässlichkeit gültig ist oder nicht, und die besagten Kohärenztests darin bestehen, die Positionswerte jeweils paarweise zu testen, und jeder Kohärenztest darin besteht, einen Grenzwert festzulegen, der von den Radien (HPL1, HPL2) der Wahrscheinlichkeitsräume (C1, C2) abhängt, die den beiden getesteten Positionswerten (P1, P2) zugeordnet sind, und den Abstand zwischen diesen beiden Positionswerten zum besagten Grenzwert zu vergleichen, sodass, wenn der besagte Abstand größer als dieser Grenzwert ist, ein Verlässlichkeitsproblem besteht;
c) man berechnet anhand der besagten ersten Positionswerte und anhand von Inertial-Daten zumindest zwei zweite Positionswerte, die jeweils die laufende Position des Luftfahrzeugs betreffen, und die Hybridpositionswerten entsprechen;
d) man führt Kohärenztests durch, um zu überprüfen, ob diese zweiten Positionswerte zueinander kohärent sind, wobei es diese Kohärenztests ermöglichen, für jeden der besagten zweiten Positionswerte festzulegen, ob er in Bezug auf seine Verlässlichkeit gültig ist oder nicht; und
e) man bestimmt ausgehend von zumindest einigen der besagten ersten und zweiten Positionswerte, die anhand der in den Schritten b) und d) durchgeführten Kohärenztests als gültig deklariert worden sind, anhand einer Konsolidierungsmethode eine laufende verlässliche Position des Luftfahrzeugs.

2. Verfahren nach Anspruch 1,
**dadurch gekennzeichnet, dass** man, wenn ein Positionswert in einem der Schritte b) und d) als ungültig deklariert worden ist, angibt, dass dem Verlässlichkeitsfehler für diesen Positionswert eine Panne zugrundeliegt.

3. Verfahren nach einem der Ansprüche 1 und 2,
**dadurch gekennzeichnet, dass** man im Schritt b) ausgehend von den besagten ersten Positionswerten unter Anwendung einer Konsolidierungsmethode eine erste verlässliche Hilfsposition bestimmt, und diese erste verlässliche Hilfsposition geeignet ist, in ein Nutzersystem übertragen zu werden.

4. Verfahren nach irgendeinem der vorherigen Ansprüche, **dadurch gekennzeichnet, dass** man im Schritt d) ausgehend von den besagten zweiten Positionswerten unter Anwendung einer Konsolidierungsmethode eine zweite verlässliche Hilfsposition bestimmt, und diese zweite verlässliche Hilfsposition geeignet ist, in ein Nutzersystem übertragen zu werden.

5. Verfahren nach irgendeinem der vorherigen Ansprüche, **dadurch gekennzeichnet, dass** man im Schritt c) die besagten zweiten Positionswerte nur anhand jener ersten Positionswerte bestimmt, die im Schritt b) als gültig deklariert worden sind.

6. Verfahren nach irgendeinem der vorherigen Ansprüche, **dadurch gekennzeichnet, dass** eine Konsolidierungsmethode darin besteht:
α) Kohärenztests durchzuführen, um alle Positionswertpaare zu überprüfen, sodass alle unverlässlichen Positionswerte eliminiert werden;
β) Leistungstest durchzuführen, um unter den in α) als kohärent getesteten Positionswerten jenes Positionswertepaar herauszufinden, das die beste Verlässlichkeit aufweist; und
γ) ausgehend vom Positionswertepaar mit der besten Verlässlichkeit einen Zwischenpositionswert, sowie einen zugehörigen Wahrscheinlichkeitsraum zu berechnen, wobei dieser Zwischenpositionswert der besagten laufenden verlässlichen Position des Luftfahrzeugs entspricht.

7. Verfahren nach irgendeinem der vorherigen Ansprüche, **dadurch gekennzeichnet, dass** im Schritt a) zwei der besagten verwendeten Empfänger zum Navigieren bestimmt sind, und ein dritter der besagten verwendeten Empfänger nur zum Überwachen bestimmt ist.

8. Vorrichtung zum Bestimmen einer zuverlässigen Position eines Luftfahrzeugs, wobei die Vorrichtung (1) folgendes umfasst:
- ein System (2), das in der Lage ist, zumindest drei erste Positionswerte zu generieren, die jeweils die laufende Position des Luftfahrzeugs betreffen, und das besagte System (2) Bordempfänger (4) umfasst, die einem satellitengesteuerten Positionierungssystem zugeordnet sind, und die jeweils geeignet sind, Informationen zum Generieren eines ersten Positionswertes zu liefern, wobei für jeden Positionswert ein Wahrscheinlichkeitsraum (C1, C2) bestimmt wird, und jeder Wahrscheinlichkeitsraum (C1, C2) um den entsprechenden Positionswert (P1, P2) zentriert ist, und das Volumen definiert, in dem sich die tatsächliche Position des Luftfahrzeugs mit einer Wahrscheinlichkeit befindet, die über einem vorbestimmten Grenzwert liegt;
- erste Vorrichtungen (8) zur Durchführung von Kohärenztests, um überprüfen zu können, ob diese ersten Positionswerte zueinander kohärent sind, wobei es diese Kohärenztests ermöglichen, für jeden der besagten ersten Positionswerte festzulegen, ob er in Bezug auf seine Verlässlichkeit gültig ist oder nicht, und die besagten Kohärenztests darin bestehen, die Positionswerte jeweils paarweise zu testen, und jeder Kohärenztest darin besteht, einen Grenzwert festzulegen, der von den Radien (HPL1, HPL2) der Wahrscheinlichkeitsräume (C1, C2) abhängt, die den beiden getesteten Positionswerten (P1, P2) zugeordnet sind, und den Abstand zwischen diesen beiden Positionswerten zum besagten Grenzwert zu vergleichen, sodass, wenn der besagte Abstand größer als dieser Grenzwert ist, ein Verlässlichkeitsproblem besteht;
- zweite Vorrichtungen (10) zum Berechnen zumindest zweier zweiter Positionswerte anhand der besagten ersten Positionswerte und anhand der Inertial-Daten, die jeweils die laufende Position des Luftfahrzeugs betreffen, und die Hybridpositionswerten entsprechen;
- dritte Vorrichtungen (16) zur Durchführung von Kohärenztests, um überprüfen zu können, ob die besagten zweiten Positionswerte zueinander kohärent sind, wobei es diese Kohärenztests ermöglichen, für jeden der besagten zweiten Positionswerte festzulegen, ob er in Bezug auf seine Verlässlichkeit gültig ist oder nicht; und
- vierte Vorrichtungen (18) zum Bestimmen einer laufenden verlässlichen Position des Luftfahrzeugs anhand einer Konsolidierungsmethode, ausgehend von zumindest einigen der besagten ersten und zweiten Positionswerte, die anhand der ersten und dritten Vorrichtungen (8, 16) als gültig deklariert worden sind.
